# EUROPEAN PATENT APPLICATION

(11) **EP 2 966 524 A1**
(43) Date of publication of application: **13.01.2016**
(21) Application number: 14176374.8
(22) Date of filing: 09.07.2014
(51) Int. Cl.: G05B 23/02

(54) **Automatic generation of a dynamic pre-start checklist**

(71) Applicant: General Electric Company, Schenectady, NY 12345 (US)
(72) Inventor: John, Justin V., Schenectady, NY 12345 (US); Grubbs, Robert William, Salem, VA 24153 (US)
(74) Representative: Illingworth-Law, William Illingworth

(57) **Abstract**

A system is provided that includes a controller 38 configured to control an industrial automation system 10. The system also includes a sensor 28,30,32 communicatively coupled to the controller 38. The sensor 28,30,32 is configured to measure at least one operating parameter of the industrial automation system, and the sensor, the controller, or a combination thereof, is configured to derive an indication that the at least one operating parameter surpasses a process limit. The system also includes a memory 44 configured to store the indication as an item included in a start checklist. Moreover, the controller 38 is configured to disable a start of the industrial automation system 10 based on the start checklist.

## Description

### BACKGROUND

The subject matter disclosed herein relates to systems and methods for controlling an industrial automation system.

In industrial automation systems, measurements of various operating parameters may cause alarms that may indicate that there is an issue with a certain piece of instrumentation or equipment. Often these alarms may only occur during transients (e.g., startup or at certain load points). In these systems, an operator must make a manual note to check that piece of equipment or instrumentation during the next opportunity which could be weeks or months later. Due to the transient nature of alarms and the length of time between alarm notification and maintenance opportunities, an operator may forget to inspect the equipment during an offline period only to receive a notification of the alarm during another transient or startup occurrence. By missing the maintenance opportunity, significant delays may occur if the problem has intensified and subsequently results in a trip or shutdown of the industrial automation unit. Additionally, often the instrumentation and/or equipment may be working properly, but the alarm limits that cause the alarm may be incorrect for a certain range of operation.

### BRIEF DESCRIPTION

Certain embodiments commensurate in scope with the originally claimed disclosure are summarized below. These embodiments are not intended to limit the scope of the claimed disclosure, but rather these embodiments are intended only to provide a brief summary of possible forms of the disclosure. Indeed, an industrial automationed system may encompass a variety of forms that may be similar to or different from the embodiments set forth below.

In an embodiment, a system includes a controller configured to control an industrial automation system. The system also includes a sensor communicatively coupled to the controller. The sensor is configured to measure at least one operating parameter of the industrial automation system. Moreover, the sensor, the controller, or a combination thereof, is configured to derive an indication that the at least one operating parameter surpasses a process limit. The system further includes a memory configured to store the indication as an item included in a start checklist. The controller is configured to disable a start of the industrial automation system based on the start checklist.

In another embodiment, a method includes using a first sensor to detect a first measurement of a first condition of an industrial system. The method also includes deriving a first alarm by determining that the first measurement falls outside of a first range of values. The method further includes triggering the first alarm. Additionally, the method includes storing the first alarm in a checklist. Furthermore, the method includes disabling a start of the industrial automation system until the checklist has been processed.

In another embodiment, an industrial automation system includes a controller configured to determine whether at least one alarm received from a sensor is a critical alarm, a transient alarm, or a nuisance alarm, by using a sensor configured to measure at least one operating parameter of the industrial automation system. The at least one alarm indicates that the at least one operating parameter of the industrial automation system has surpassed a respective limit. The controller is also configured to store the at least one alarm in a checklist. Furthermore, the controller is configured to disable a start of the industrial automation system until the checklist has been processed.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a block diagram of an embodiment of an industrial automation system including a controller;
FIG. 2 is a block diagram of an embodiment of controll that may be usied in the industrial authomation sytem of FIG. 1;
FIG. 3 illustrates an embodiment of a a graphical user interface (GUI) that may be used in the industrial authomatiom system of FIG. 1; and
FIG. 4 is a flow diagram illustrating am embodiment of a process for controlling an industrial automation system using a startup checklist.

### DETAILED DESCRIPTION OF THE DISCLOSURE

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

As discussed in detail below, in an industrial automation system, alarms may result from possible equipment issues (e.g. deviation limit alarm) these alarms may be automatically added to a startup check list that captures the basic alarm information. When the next shutdown occurs the operators and maintenance staff can work through the auto-generated startup checklist to ensure each alarm is addressed prior to the next startup in addition to a generic checklist that may be used with a respective start type. This addition of the checklist may ensure that transient alarms are not forgotten and relevant maintenance is not missed during the next shutdown. The checklist then may be used to prevent the unit from starting until the checklist has been completed. By preventing starting until the checklist has been completed, the checklist will ensure the operator or supervisor reviews the alarms and makes a decision to address the issue or suppress each alarm. Additionally, the checklist may store the alarms as a variety of different alarm types. Furthermore, some alarm types may be suppressed or removed by operators, but other alarms types may only be removed or suppressed by users with higher levels of authorization (e.g., supervisor). In some industrial automation systems, the checklist can be cleared at anytime including startup and normal operation of the industrial automation system. Moreover, the checklist may be used to detect nuisance alarms and/or alarms that occur during repeated transients to aid in the identification of alarms where an alarm limit is incorrect. In such alarms, the system may recalculate a limit automatically or suggest that a user or other device recalculate the alarm limit either generally or during an occurrence of the alarm.

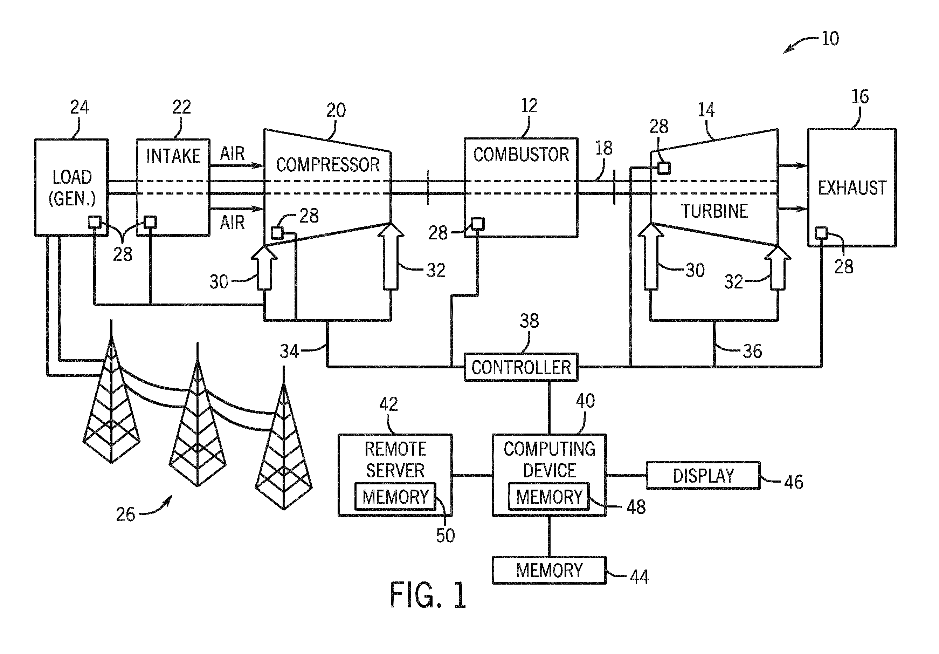

With the foregoing in mind, FIG. 1 illustrates an embodiment of a industrial automation system 10 incorporating the techniques disclosed herein. The industrial automation system 10 may be a gas turbine system, a hydroturbine, other turbomachinery, or any suitable industrial automation system. As depicted, the industrial automation system 10 may include a combustor 12, which may receive a fuel/air mixture for combustion. This combustion creates hot, pressurized exhaust gases, which the combustor 12 directs through a turbine 14 (e.g., part of a rotor) and toward an exhaust outlet 16. As the exhaust gases pass through the turbine 14, the resulting forces cause the turbine blades to rotate a drive shaft 18 along an axis of the industrial automation system 10. As illustrated, the drive shaft 18 is connected to various components of the industrial automation system 10, including a compressor 20. Furthermore, in some embodiments, the industrial automation system 10 may include an exhaust heat recapture that may recycle some of the heat of exhaust gases passed throught the exhaust outlet.

The drive shaft 18 may include one or more shafts that may be, for example, concentrically aligned. The drive shaft 18 may include a shaft connecting the turbine 14 to the compressor 20 to form a rotor. The compressor 20 may receive air from an intake (and inlet guide vanes) include blades coupled to the drive shaft 18. Thus, rotation of turbine blades in the turbine 14 may cause the shaft connecting the turbine 14 to the compressor 20 to rotate the blades within the compressor 20. The rotation of blades in the compressor 20 compresses air that is received via an air intake 22. The compressed air is fed to the combustor 12 and mixed with fuel to allow for higher efficiency combustion. The shaft 18 may also be connected to a load 24, which may be a vehicle or a stationary load, such as an electrical generator in a power plant or a propeller on an aircraft. When the load 24 is an electrical generator, the electrical generator may be coupled to a power grid 26 for distributing electrical power to, for example, residential and commercial users.

The industrial automation system 10 may also include a number of sensors 28 distributed throughout the industrial automation system 10. In certain embodiments, the sensors 28 may include field devices that measure various operating parameters of the turbine system. For example, one or more sensors 28 may be be distributed within the combustor 12, the turbine 14, the exhaust 16, the compressor 20, the intake 22, the load 24, and/or another suitable component to monitor various parameters related to the operation and performance of the industrial automation system 10. Although some embodiments of the sensors 28 are included within the various components of the industrial automation system 10, some embodiments of the turbine may additionally or alternatively include inlet sensors 30 and/or outlet sensors 32 positioned adjacent to inlet and outlet portions of the turbine 14, and the compressor 20, respectively. The sensors 28, inlet sensors 30, and/or outlet sensors 32 may measure, for example, environmental conditions, such as ambient temperature and ambient pressure, as well as a various other operating parameters related to the operation and performance of the industrial automation system 10, such as, exhaust gas temperature, rotor speed, engine temperature, engine pressure, gas temperature, engine fuel flow, exhaust flow, vibration, clearance between rotating and stationary components, compressor discharge pressure, emissions (e.g., nitrogen oxides, sulfur oxides, carbon oxides and/or particulate count), electrical production of a generator, turbine exhaust pressure, and/or other suitable operating parameters. Further, the sensors 28, 30, and 32 may also measure actuator information such as valve position, and a geometry position of variable geometry components (e.g., inlet guide vane) angles. In some embodiments, one or more sensors may be used to meausre operating paramters of interrelated systesm, such as any system in a power plant in which the industrial automation system 10 is operated.

The sensors 28, 30, and 32 may also be configured to monitor engine parameters related to various operational phases of the industrial automation system 10. Measurements taken by the sensors 28, 30 and 32 (or sensors in interrelated systems) may be transmitted via module lines 34 and 36, which may be communicatively coupled to a controller 38. The controller 38 may use the measurements to actively control the industrial automation system 10. For example, the controller 38 may adjust the firing temperature in the combustor 22, adjust inlet guide vane (IGV) angles in the compressor 20, adjust an inlet bleed heat (IBH) valve, and/or other suitable system manipulations. Additionally, the controller 38 may be coupled to a computing device 40 that may provide interaction between the controller 38, a remote server 42, an auxiliary memory 44, and/or a display 46. In certain embodiments, the controller 38 may be included in the computing device 40. For example, the computing device 40 may include controller logic and/or stored instructions that cause a processor of the computing device 40 to perform the controller 38 operations. In some embodiments, the computing device 40 may include a desktop computer, a tablet computer, a smartphone, a laptop computer, a router, a network hub, and/or other computing devices suitable for providing an interface between the controller 38 and the remote server 42, the auxiliary memory 44, and/or the display 46. Moreover, the remote server 42 may include a remote computing device communicatively coupled to the computing device 40. For example, in some embodiments, the computing device 40 may couple to the remote server 42 using a network connection (e.g., local area network (LAN), wide area network (WAN)) or an Internet connection. Accordingly, in some embodiments, the computing device 40 and the remote server 42 each may include networking interfaces (e.g., Ethernet cards, wireless network cards, and/or similar networking devices). Additionally, in certain embodiments, the display 46 may include one or more display devices (e.g., computer monitor and/or computing device screen) that may be incorporated into the computing device 40 (e.g., screen for smart-phone/laptop) or distinct from the computing device 40 (e.g., desktop computer and monitor).

Furthermore, the controller 38 and/or the sensors 28, 30, and 32 may store measurements (i.e., operational parameters of the industrial automation system 10) in a computing device memory 48 located on the computing device 40, a remote memory 50 stored on a remote server, and/or the auxiliary memory 44. In certain embodiments, auxiliary memory 44, computing device memory 48, and/or the remote memory 50 may include various types of computing memory, such as volatile, nonvolatile, read-only memory (ROM), random accessible memory, or other suitable memory types stored in a variety of storage devices. For example, some embodiments of auxiliary memory 44, computing device memory 48, and/or the remote memory 50 may include hard-drive disks (HDD), flash memory, optical discs (e.g., CD-ROM, DVD-ROM), semiconductor memory, magnetic tapes, network storage devices, and/or other suitable storage devices.

As illustrated, some embodiments of the industrial automation system 10 utilize the module line 34 to transmit measurements from the combustor 12, compressor 20, intake 22, and/or the load 24, and the module line 36 to transmit measurements from the turbine 14 and the exhaust 16. However, some embodiments may include dedicated lines for each sensor 28, 30, and 32 or may include one line for each component of the industrial automation system 10. In other words, some embodiments may include one line for each component even if the respective component has more than 1 sensor. For example, some embodiments include a single line that transmits measurements from the inlet sensor 30 and outlet sensor 32 on the turbine 14 to the controller 38. Moreover, any type of field devices may be used as or in addition to the sensors 28, 30, and 32. For example, in some embodiments the sensors 28, 30, and/or 32 may include "smart" field devices such as Fieldbus Foundation, Profibus, and/or Hart field devices. It is also to be appreciated that the industrial automation system 10 is only discussed as an illustrative embodiment of an industrial automation system, and that other industrial automation systems may include, for example, automated power generation systems, such as gas turbines, steam turbines, wind turbines, or hydroturbines, heat recovery steam generators (HRSG), power generators, fuel skids, gas processing systems, or any other automated power generation systems or partially-automated power generation systems. Other industrial automation systems may include automated manufacturing systems such as chemical plants, pharmaceutical plants, oil refineries, automated production lines or similar automated or partially-automated manufacturing system.

The sensors 28, 30, and 32 may determine that a measured operating parameter is outside an expected range (e.g., deviation alarm). A sensor 28, 30, or 32 that has determined that the operating parameter is outside an expected range may send an alarm to the controller 38. The alarms may be classified into various categories, such as a critical alarm, a transient alarm, a nuisance alarm, an instrumentation alarm, an operational alarm, and/or other suitable alarms. For example, a critical alarm may represent that a measured parameter value risks damage to the industrial automation system 10 if the alarm is not addressed and/or maintenance performed on the relevant component(s) of the industrial automation system 10. A transient alarm may represent a value outside an expected range during a short interval and/or during transients of the industrial automation system. For example, transient alarms may occur during a startup of shutdown of the industrial automation system 10. Additionally or alternatively, a transient alarm may indicate that an operating value was measured outside an expected range but within an allowed range for a certain period of time. Moreover, a nuisance alarm may include an alarm that occurs repeatedly during a startup, operation, or shutdown of the industrial automation system 10. In some embodiments, a nuisance alarm may occur from a sensor malfunction or result from an improper expected range calculation. Although the previous discussion discloses that the sensors 28, 30, and 32 may determine the alarm, some embodiments of the industrial automation system 10 include a controller that receives measured values from the sensors 28, 30, and 32 and determines that the values are outside an expected range and enable a corresponding alarm.

As mentioned above, the computing device 40 may be communicatively coupled to the controller 38 such that it may request and/or receive data from the controller 38 regarding the operational parameters of the system 10. The operational parameters of the system 10 may include, for example, information regarding the status (e.g., functional, operational, malfunctioning, or similar status), the performance (e.g., the power output, revolutions per minute, load, or similar performance parameter), the environmental conditions (e.g., temperature, pressure, voltage, current, present or levels of a particular analyte, or similar environmental condition), and so forth, that may be generally tracked by the controller 38 for the industrial automation system, such as the industrial automation system 10.

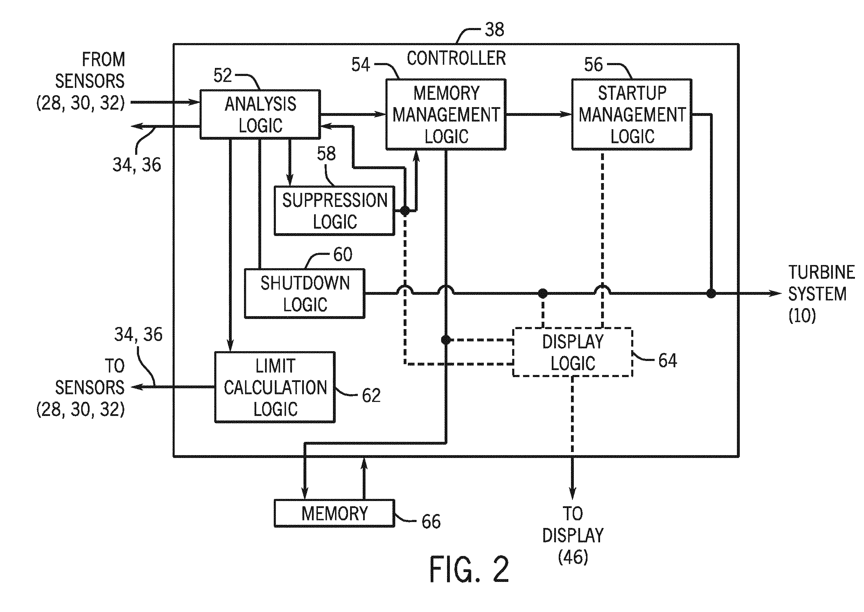

FIG. 2 illustrates an embodiment of the controller 38 that may be used in the industrial automation system 10. As illustrated the controller 38 includes an analysis logic 52, a memory management logic 54, a startup management logic 56, a suppression logic 58, a shutdown logic 60, and a limit calculation logic 62. Additionally, some embodiments of the controller 38 may include a display logic 64 and one or more processors. As previously discussed, the controller 38 receives one or more measurements or alarms from the sensors 28, 30, and 32. In embodiments, where the analysis logic 52 receive measurements from the sensors 28, 30, and/or 32, the analysis logic 52 determines whether the measured values are within an expected range for the respective operating parameter measured. If the value occurs outside an expected range, the analysis logic 52 may determine and set an alarm for each variation of the measured operating parameters outside the expected range. Additionally or alternatively, the analysis logic 52 may receive and determine that a received alarm is a transient, nuisance, or critical alarm.

The classified alarms are then transmitted from the analysis logic 52 to the memory management logic 54 that stores the transmitted alarms in a memory 66. The memory 66 may be stored in the auxiliary memory 44, computing device memory 48, remote memory 50, a memory located in the controller 38, and/or a memory located in sensors 28, 30, and/or 32. In certain embodiments, the alarms are sorted into a checklist that includes various information, such as a sensor at which the operating parameter was measured, the date and time of the alarm, the status of the component (e.g., compressor 20) or the industrial automation system 10 during the alarm (e.g., shutdown, startup, peak load, partial load, etc.), the number of occurrences of a similar alarm using the same alarm since a reset of the alarm, whether the alarm has been suppressed, the name of an operator that suppressed the alarm, or other relevant information regarding the alarm. This information may be stored in any suitable storage arrangement such as a database or other suitable storage format. Additionally, the checklist may include scheduled maintenance that is tracked according to online time of the industrial automation system 10 or time lapsed since the last maintenance. Furthermore, the checklist may be added into a generic checklist that applies to various types of startup. For example, the checklist may be appended to a cold start checklist, a hot start checklist, a syngas start checklist, a diesel start checklist, a natural gas start checklist, a restart checklist, another suitable checklist, or a combination thereof. In other words, a full startup checklist may include the alarm entries in addition to other action items that may be derived from other generic startup checklist. The generic start checklist may be selected according to various factors, such as whether the industrial automation system 10 has recently been operating (e.g., restart), the fuel to be used (e.g., syngas, diesel, natural gas), an ambient temperature at the time of start (e.g., hot start or cold start), and/or other suitable factors to determine various start checklists. Additionally, some checklists may include only the alarms (e.g., alarm checklist)

The stored information and/or checklist stored in memory is then accessed by a startup management logic 56. The startup management logic 56 may disable a startup of the industrial automation system 10 until a respective startup checklist has been performed. Additionally, the startup management logic 56 determines whether any alarms or scheduled maintenances are recorded in a startup checklist in the memory 66. If the startup management logic 56 determines that the startup checklist in the memory 66 does not contain any alarms or scheduled maintenances, the startup management logic 56 verifies that the stored checklist has been completed and a remainder of the startup process for the industrial automation system 10 is performed. However, if the startup management logic 56 determines that one or more alarms are stored in the startup checklist in the memory 66, the startup management logic 56 continues to disable a startup of the industrial automation system 10 until the checklist is completed. In certain embodiments, certain alarm types may be suppressed or skipped when the industrial automation system 10 is started up. For example, in some embodiments, the startup management logic 56 may disable a startup of the industrial automation system 10 when a critical alarm is stored in the checklist but not disable a startup of the industrial automation system 10 when only transient alarms or nuisance alarms are stored in the checklist. In other words, in some embodiments, the checklist is considered complete when no critical alarms remain in the checklist. In other embodiments, the startup management logic 56 may disable a startup of the turbine system for any non-nuisance alarms (e.g., critical, transient) stored in the checklist until the non-nuisance alarms are removed or suppressed, as discussed below. Moreover, some embodiments of the startup management logic 56 may disable a startup of the industrial automation system 10 until all alarms are removed from or suppressed in the start checklist.

In some embodiments, the controller 38 may include the suppression logic 58 that enables the suppression and/or removal of alarms from the startup checklist stored in the memory 66. For example, in some embodiments, the controller 38 may enable a user to suppress an alarm during a startup of the industrial automation system 10. In some embodiments, the suppression of the various types of alarms may be limited according a user's permissions or levels or authority. For example, in some embodiments, one level of authorization may not be able to suppress any alarms, but a second level of authorization may be able to suppress or remove nuisance alarms from the checklist. Moreover, in such embodiments, a third level of authorization may be able to suppress or remove transient alarms from the checklist, and a fourth level of authorization may be able to suppress or remove critical alarms. The levels of authorizations may be adjusted so that each level of authorization enables the removal or suppression of one or more types of alarms.

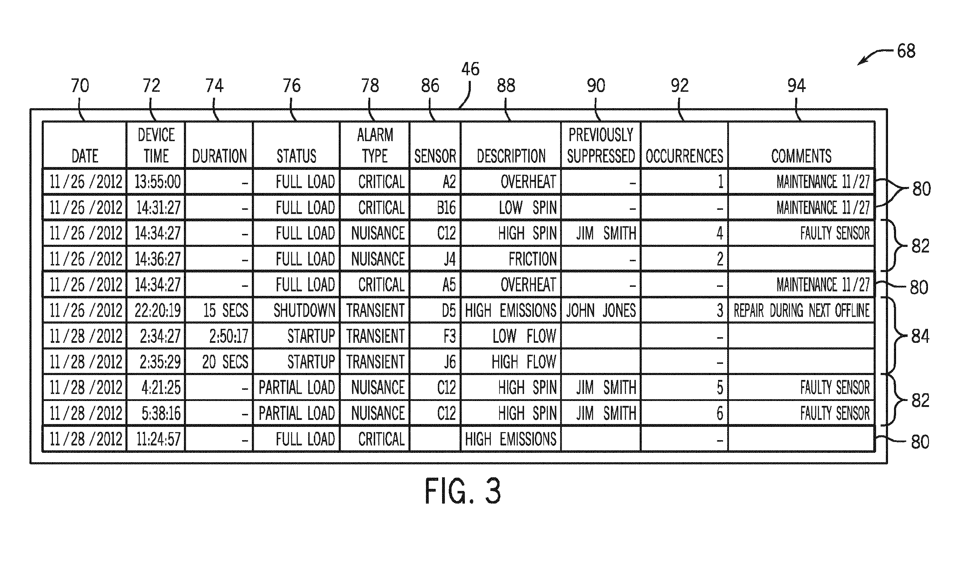

The suppression logic 58 may be used to suppress or remove various alarms during operation of the industrial automation system 10. For example, in some embodiments, the suppression logic 58 and/or startup management logic 56 may send a signal to the display logic 64 to display a graphical user interface (GUI) on the display 46 upon determination that the startup management logic 56 has disabled a startup of the industrial automation system 10. In certain embodiments, the suppression logic 58 may be employed during a restart, a startup, an offline period, a maintenance period, or any other suitable period of operation of the industrial automation system 10. The display logic 64 may be located in the controller 38 or may be located on the computing device 40 (e.g., a graphics processor and/or graphics card). FIG. 3 illustrates an embodiment of graphical user interface (GUI) 68 that may be displayed on the display 46 to represent the checklist to a user. As illustrated, the GUI 68 may include a date column 70 that displays the date of a captured alarm. The GUI 68 may also include a time column 72 that displays the time at which the alarm began and a duration column 74 that displays a duration for the alarms. Furthermore, certain embodiments of the GUI 68 include a status column 76 that tracks the status of the industrial automation system 10 or a component thereof. Some embodiments of the GUI 68 include an alarm type column 78 that indicated which types of alarms are present, such as critical alarms, nuisance alarms, transient alarms, scheduled maintenance, or other suitable types of alarms. Additionally or alternatively, some embodiments of the GUI 68 may indicate the type of alarm by coloring a row corresponding to an alarm type. For example, a critical alarm row 80 may be colored red, a nuisance alarm row 82 may be colored yellow, and a transient alarm row 84 may be colored. Additionally, the color of the row may be cleared or changed (e.g., to green) upon removal or suppression of the alarm. Alternatively, the color of the row may be changed (e.g., to orange) when the alarm is suppressed, but cleared alarms may be removed from the GUI 68 entirely.

Returning to FIG. 3, the illustrated embodiment of the GUI 68 includes a sensor column 86. In certain embodiments, the sensor column 86 may indicate which sensor 28, 30, or 32 caused the alarm using a unique identifier. For example, in some embodiments, an "A2" sensor may correspond to a sensor in the combustor 12 that measures firing temperature of the combustor 12. Additionally, some embodiments of the GUI 68 include a description column 88. In some embodiments, the description column 88 may describe which sensor caused the alarm (e.g., primary combustor sensor). In other embodiments, the description column 88 may describe what caused the alarm (e.g., overheat). In certain embodiments, the GUI 68 may include a previously suppressed column 90 that displays whether the alarm has been previously suppressed, and if the alarm has been previously suppressed, who suppressed the alarm. Additionally, the GUI 68 may include a display an occurrences column t92 that displays the number of occurrences of the alarm that the same sensor has trigged since initiation of a checklist, a reset of the checklist/alarm, or a previous maintenance period. Certain embodiments the GUI 68 include a comments column 94 that displays any comments that may be attached to an alarm entry. Furthermore, various embodiments of the GUI 68 may include more or less information that is included in the illustrated embodiment. For example, various embodiments of the GUI 68 may include any information that is stored in the checklist stored in the memory 66.

Returning to FIG. 2, the controller 38 may also include shutdown logic 60 that may receive a critical alarm from the analysis logic 52 that is beyond a tolerated amount. Upon determining that some threshold has been surpassed and/or risk to the industrial automation system 10 exists, the shutdown logic 60 may shut down the industrial automation system 10 until the relevant alarm has been cleared by the suppression logic 58. Some embodiments of the controller 38 may include a limit calculation logic 62 that receives an alarm from the analysis logic 52. In some embodiments, the limit calculation logic 62 may determine that the alarm results from a limit error. For example, when an alarm occurs in the checklist during a particular repeated transient (e.g., startup), the limit calculation logic 58 may recalculate the limit. For example, in some embodiments, the suppression logic 58 may suppress/disable the alarm during startup. In other embodiments, the limit calculation logic may determine a new threshold for the alarm according to the adjusted model. This suggested threshold may then be sent to the sensors or stored in the memory 66. In certain embodiments, the limit calculation logic 62 may determine that an alarm has occurred on multiple occasions (dependent on or independent from transients) and recommend that a user or other logic calculate a limit for the alarm.

The previous discussion pertaining to logic components can be embodied using hardware or software. Hardware embodiments may include integrated circuits or other circuitry configured to perform the tasks of the logic units. Software instructions to perform the above-described logic functions may be stored in the memory 66 and/or any other suitable memory unit (e.g., optical discs). Moreover, some embodiments of the controller 38 may include additional logic units or omit various logic units. Furthermore, in some embodiments, the controller 38 may include logic units that are combinations of functions of the illustrated logic units.

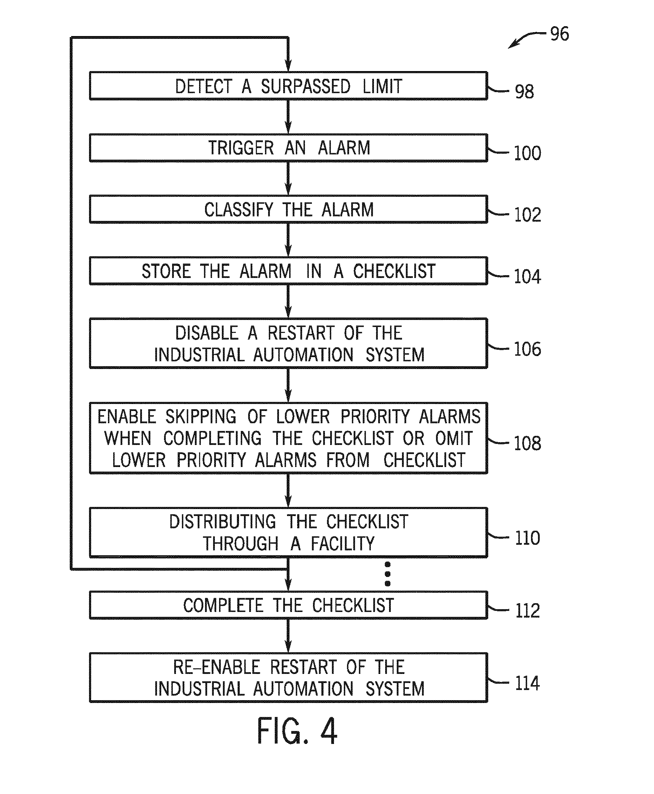

FIG. 4 illustrates an embodiment of a process for operating the industrial automation system 10. First, the sensor 28, 30, and/or 32 detects that a measured operating parameter has surpassed a limit (block 98). For example, in some embodiments, the limit may be a range of expected values initially determined or subsequently calculated by the limit calculation logic 62 or other suitable calculation units. Once the measured operating parameter has surpassed the limit, either the sensor measuring the operating parameter or the controller 38 triggers an alarm (block 100). The analysis logic 52 then determines which alarm type corresponds to the triggered alarm (block 102). For example, the analysis logic 52 may determine that alarms beyond a critical limit may be considered critical alarms. Additionally, the analysis logic 52 may classify an alarm as critical or nuisance based on the location of the sensor and/or the repeat nature of the alarm. Moreover, the analysis logic 52 may classify the alarm as transient if the alarm occurs during a transient and has been previously recorded during one or more transients. Once the alarm has been classified, the controller 38 stores the alarm in a checklist stored in the memory 66 (block 104). The checklist may be stored alone or appended to a generic checklist (e.g., syngas checklist).

Upon the detection of certain alarm types in the checklist, the startup management logic 56 may disable a startup of the industrial automation system 10 until the checklist has been completed (block 106). In some embodiments, the suppression logic 58 enabling skipping lower priority alarms when completing the checklist or omit lower priority alarms from the checklist (block 108). In some embodiments, the controller 38 may simply omit storing low priority alarms when storing alarms in the checklist. Additionally, in some embodiments, the suppression logic 58 may enable skipping of higher priority alarms with increased authorization levels. In certain embodiments, skipping alarms may be performed during an attempted startup of the turbine system or another suitable time whether the industrial automation system 10 is online or offline. In some embodiments, no alarms may be suppressed during a startup and may only be removed when maintenance is performed.

A stored checklist (with or without skipped alarms) may be distributed through a facility housing the industrial automation system 10 (block 110). In some embodiments, the checklist may be distributed using a LAN, WAN, Internet, a cloud, or other suitable data transmittal methods to various computing devices such as smartphones, tablet computers, laptop computers, desktop computers, server, or other suitable computing devices. In some embodiments, the checklist may be shared after any changes are made to the checklist, but other embodiments may share the checklist upon the shut down or maintenance of the industrial automation system 10. Before or after the industrial automation system 10 is shut down, the checklist may be completed (block 112). For example, an operator or a supervisor may remove alarms from the checklist upon maintenance of the industrial automation system 10 or determination that the alarm is invalid or should be rectified later. In some embodiments, the checklist may be completed using any of the computing devices to which the checklist has been transmitted (e.g., smartphone). Once the checklist is complete, the startup management logic 56 re-enables a startup of the industrial automation system 10 (block 114).

Technical effects of the disclosure include insuring that alarms are handled before a startup of an industrial automation system to reduce delays that may result in shutting down the industrial automation system after a startup has begun or delays in maintenance that are delayed until the next shutdown of the industrial automation system. For example, in some embodiments, alarms may be stored in a startup checklist that are then added to a generic checklist (e.g., restart checklist, cold start checklist) that includes the generic steps for starting the industrial automation system under the current status of the industrial automation system. By storing the checklist and preventing startup of the industrial automation system until the checklist is completed (or each alarm is suppressed), the checklist insures that an operator reviews the previous alarms and decides whether to address the alarm during a period when maintenance is possible (e.g., the industrial automation system is offline). Additionally, by tracking the occurrence of an alarm during certain transients, a determination may be made that the equipment is working correctly, and a new alarm limit may be calculated to block the alarm from repeatedly occurring during the respective transient.

This written description uses examples to disclose the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system comprising:
   a controller configured to control an industrial automation system;
   a sensor communicatively coupled to the controller, the sensor configured to measure at least one operating parameter of the industrial automation system, wherein the sensor, the controller, or a combination thereof, is configured to derive an indication that the at least one operating parameter surpasses a process limit;
   a memory configured to store the indication as an item included in a start checklist, wherein the controller is configured to disable a start of the industrial automation system based on the start checklist.
2. The system of clause 1, wherein the item comprises a repeated alarm, and the controller is configured to determine that the at least one operating parameter repeatedly has surpassed the respective limit to derive the repeated alarm.
3. The system of clause 1 or clause 2, wherein the controller is configured to analyze the repeated alarm to derive if the repeated alarm is based on a limit error.
4. The system of any preceding clause, wherein the controller is configured to suggest a new limit if the repeated alarm is based on the limit error.
5. The system of any preceding clause, wherein the start checklist comprises a cold start checklist, a hot start checklist, a syngas start checklist, diesel start checklist, natural gas start checklist, a restart checklist, an alarm-based checklist, or a combination thereof.
6. The system of any preceding clause, wherein the memory is included in the controller, the sensor, or a combination thereof.
7. The system of any preceding clause, comprising a computing device communicatively coupled to the controller, to the sensor, or a combination thereof, wherein the memory is included in the computing device.
8. The system of any preceding clause, wherein the controller is configured to cause a display of the checklist before starting the industrial automation system.
9. A method of controlling an industrial automation system, comprising:
   using a first sensor to detect a first measurement of a first condition of an industrial system;
   deriving a first alarm by determining that the first measurement falls outside of a first range of values;
   triggering the first alarm;
   storing the first alarm in a checklist; and
   disabling a start of the industrial automation system until the checklist has been processed.
10. The method of any preceding clause, comprising:
   using a second sensor to detect a second measurement of a second condition of the industrial system;
   deriving a second alarm by determining that the second measurement falls outside of a second range of values;
   storing the second alarm in the checklist; and
   providing a system to enable a user to remove the second alarm from the checklist when the checklist is processed, wherein the first alarm comprises a higher priority alarm when compared to the second alarm.
11. The method of any preceding clause, comprising:
   detecting whether the user has a desired authorization level;
   upon detecting the desired authorization level, enabling the user to remove the first alarm from the checklist when the checklist is processed.
12. The method of any preceding clause, comprising classifying the first alarm as a critical alarm, a nuisance alarm, or a transient alarm.
13. The method of any preceding clause, comprising omitting the first alarm from the checklist if the first alarm is classified as a nuisance alarm or as a transient alarm of a turbomachinery system.
14. The method of any preceding clause, comprising distributing the checklist throughout a facility included in the industrial automation system.
15. An industrial automation system, comprising:
   a controller configured to:
      determine whether at least one alarm received from a sensor is a critical alarm, a transient alarm, or a nuisance alarm, by using a sensor configured to measure at least one operating parameter of the industrial automation system, wherein the at least one alarm indicates that the at least one operating parameter of the industrial automation system has surpassed a respective limit;
      store the at least one alarm in a checklist; and
      disable a start of the industrial automation system until the checklist has been processed.
16. The system of any preceding clause, wherein the controller is configured to process the checklist by receiving one or more inputs to remove all critical alarms from the checklist.
17. The system of any preceding clause, wherein the controller is configured to suggest a new limit if controller determines that the at least one alarm is a nuisance alarm.
18. The system of any preceding clause, wherein the controller is configured to suppress the at least one alarm during the start of the industrial automation system if the controller determines that the at least one alarm is a transient alarm.
19. The system of any preceding clause, wherein the controller is configured to shutdown the industrial automation system if the controller determines that the at least one alarm is a critical alarm.
20. The system of any preceding clause, wherein the controller is configured to display the at least one alarm to a user via a visual display, wherein the controller is configured to enable the user to delay display of the alarm to a subsequent time.

## Claims

1. A system comprising:
a controller (38) configured to control an industrial automation system;
a sensor (28,30,32) communicatively coupled to the controller (38), the sensor configured to measure at least one operating parameter of the industrial automation system, wherein the sensor, the controller, or a combination thereof, is configured to derive an indication that the at least one operating parameter surpasses a process limit;
a memory (44) configured to store the indication as an item included in a start checklist, wherein the controller (38) is configured to disable a start of the industrial automation system based on the start checklist.

2. The system of claim 1, wherein the item comprises a repeated alarm, and the controller is configured to determine that the at least one operating parameter repeatedly has surpassed the respective limit to derive the repeated alarm.

3. The system of claim 1 or claim 2, wherein the controller is configured to analyze the repeated alarm to derive if the repeated alarm is based on a limit error.

4. The system of any preceding claim, wherein the controller is configured to suggest a new limit if the repeated alarm is based on the limit error.

5. The system of any preceding claim, wherein the start checklist comprises a cold start checklist, a hot start checklist, a syngas start checklist, diesel start checklist, natural gas start checklist, a restart checklist, an alarm-based checklist, or a combination thereof.

6. The system of any preceding claim, wherein the memory is included in the controller, the sensor, or a combination thereof.

7. The system of any preceding claim, comprising a computing device communicatively coupled to the controller, to the sensor, or a combination thereof, wherein the memory is included in the computing device.

8. The system of any preceding claim, wherein the controller is configured to cause a display of the checklist before starting the industrial automation system.

9. A method of controlling an industrial automation system, comprising:
using a first sensor to detect a first measurement of a first condition of an industrial system;
deriving a first alarm by determining that the first measurement falls outside of a first range of values;
triggering the first alarm;
storing the first alarm in a checklist; and
disabling a start of the industrial automation system until the checklist has been processed.

10. The method of claim 9, comprising:
using a second sensor to detect a second measurement of a second condition of the industrial system;
deriving a second alarm by determining that the second measurement falls outside of a second range of values;
storing the second alarm in the checklist; and
providing a system to enable a user to remove the second alarm from the checklist when the checklist is processed, wherein the first alarm comprises a higher priority alarm when compared to the second alarm.

11. The method of claim 9 or claim 10, comprising:
detecting whether the user has a desired authorization level;
upon detecting the desired authorization level, enabling the user to remove the first alarm from the checklist when the checklist is processed.

12. The method of any of claims 9 to 11, comprising classifying the first alarm as a critical alarm, a nuisance alarm, or a transient alarm.

13. The method of any of claims 9 to 12, comprising omitting the first alarm from the checklist if the first alarm is classified as a nuisance alarm or as a transient alarm of a turbomachinery system.

14. The method of any of claims 9 to 13, comprising distributing the checklist throughout a facility included in the industrial automation system.

15. An industrial automation system, comprising:
a controller configured to:
determine whether at least one alarm received from a sensor is a critical alarm, a transient alarm, or a nuisance alarm, by using a sensor configured to measure at least one operating parameter of the industrial automation system, wherein the at least one alarm indicates that the at least one operating parameter of the industrial automation system has surpassed a respective limit;
store the at least one alarm in a checklist; and
disable a start of the industrial automation system until the checklist has been processed.
